# EUROPÄISCHE PATENTSCHRIFT

(11) **EP 0 767 571 B1**
(45) Veröffentlichungstag und Bekanntmachung des Hinweises auf die Patenterteilung: **08.09.2004**
(21) Anmeldenummer: 96104197.7
(22) Anmeldetag: 16.03.1996
(51) Int. Cl.: H04M 11/02, H04N 7/18, H04M 3/42

(54) **Haustelekommunikationsanlage**
Domestic telecommunications installation
Installation domestique de télécommunication

(30) Priorität: 04.10.1995 DE 19536912
(43) Veröffentlichungstag der Anmeldung: 09.04.1997
(73) Patentinhaber: Deutsche Telekom AG, 53113 Bonn (DE)
(72) Erfinder: Simon, Werner, Dipl.-Ing., 64289 Darmstadt (DE)

(56) Entgegenhaltungen:
- EP-A- 0 557 778
- GB-A- 2 285 365
- US-A- 5 032 820

## Beschreibung

Die Erfindung betrifft eine Haustelekommunikationsanlage nach dem Oberbegriff des Patentanspruchs 1.

Haustelekommunikationsanlagen sind grundsätzlich bekannt. So ist zum Beispiel für die Anwendung in Ein- und Mehrfamilienhäusern die Telekommunikationsanlage amex 601 oder amex 802 der Deutschen Telekom AG seit längerem im Einsatz. Außerdem sind sogenannte Familientelefonanlagen bekannt, die an einen Hauptanschluß oder an zwei Hauptanschlüsse anschließbar sind und an die bis zu fünf Sprechstellen angeschaltet werden können. Derartige kleine Telekommunikationsanlagen sind zum Beispiel im Hilfsbuch für Entstörer von K. Kabatt, Verlag für Wissenschaft und Leben Georg Heidecker GmbH, Erlangen, 1989, auf den Seiten 391 und 392 beschrieben. Diese Familientelekommunikationsanlagen werden hauptsächlich für den privaten Fernsprechverkehr in Einfamilienhäusern und größeren Wohnungen eingesetzt. Gegenüber den kleinen Nebenstellenanlagen bestehen folgende Unterschiede: Für das sichere Arbeiten der Anschlußorgane für die Sprechstellen ist die Leitungslänge bis zu den Sprechstellen sehr begrenzt. Die Schaltung außenliegender Sprechstellen ist nicht möglich. Die Verkehrsabwicklung innerhalb einer Familientelefonanlage wie Amtsholung, Rückfrage u.s.w. erfolgt ohne zusätzliche Signalisierungsverfahren (Erdtasten- oder Flash-Signalisierung). Daher können die einzelnen Sprechstellen zweiadrig verkabelt und Sprechapparate ohne Erdtaste verwendet werden.

Zur Anschaltung sind alle Sprechapparate zugelassen, die für einfache Hauptanschlüsse vorgesehen sind. Ab Seite 408 der letztgenannten Literaturstelle ist auch eine Türfreisprecheinrichtung beschrieben. Aus der Literaturstelle geht hervor, daß während eines Türgesprächs bei den normalen Familientelefonanlagen keine Sprechstellen intern gerufen werden können. Der Türöffner wird für etwa drei Sekunden betätigt; die Wiederholung kann durch erneute Wahl veranlaßt werden, jedoch nur von der Sprechstelle aus, die vorher auch das Türgespräch geführt hat. Die Türfreisprecheinrichtung ist nicht amtsberechtigt. Die verschiedenen Typen der heute handelsüblichen Telefone sind zum Beispiel in der Literaturstelle von K.H. Schmidt "Endgeräte am analogen Telekommunikationsnetz, R.v. Decker's Verlag, G. Schenk, Heidelberg, 1992, ab Seite 87 beschrieben. Außerdem ist es grundsätzlich bekannt, die Eingangstüre eines Gebäudes mit einer Videokamera zu überwachen.

Zum Stand der Technik gehört auch die Vorrichtung, die im Dokument GB-A-2285365 offenbart ist, in der an eine Haustelekommunikationsanlage eine Türfreisprecheinrichtung angeschlossen ist, mit der auch ein Türöffner betätigt werden kann. Ferner beschreibt GB-A-2285365, dass Eingangstüren mit Videokameras überwacht werden können.

Diese Anlagen haben jedoch alle den Nachteil, daß sie nur bestimmte Funktionen ausführen können und nur ganz spezielle Endstellen bzw. Türöffner an sie angeschlossen werden können.

Der Erfindung liegt deshalb die Aufgabe zugrunde, die Funktionen der oben genannten auf analoger Übertragungstechnik basierenden Haustelekommunikationsanlagen, der Türsprechanlagen und der Videobeobachtungsanlagen so zu kombinieren, daß eine funktionelle Einheit entsteht, die technisch mittels integrierter Schaltungen und/oder Programmierung leicht an die jeweiligen Erfordernisse und Standards der einzelnen Geräte angepaßt werden können, wobei sowohl Ton- als auch Steuersignale und/oder Videosignale übertragbar sein sollen und Telekommunikation nach außen ohne weiteres möglich sein soll.

Die erfindungsgemäße Lösung der Aufgabe ist im Kennzeichen des Patentanspruchs 1 charakterisiert. Weitere Lösungen und Ausgestaltungen sind in den Patentansprüchen 2 bis 5 angegeben.

Die erfindungsgemäße Haustelekommunikationsanlage für mehrere Endstellen bzw. Videotelefonapparate für Gebäude mit Türfreisprech-, Klingel- und Türöffneranlage und/oder Tür-Videoanlage in analoger Übertragungstechnik weist gegenüber den bisher bekannten einzelnen Anlagen oder nur teilweise integrierten Anlagen den technischen Vorteil auf, daß sie neben der funktionellen Einheit der beiden Anwendungen und der daraus sich ergebenden einfachen Montage als Gegenstelle zur Video-Türsprechstelle nur ein handelsübliches Videotelefon benötigt, das auch zur Kommunikation mit anderen Videotelefonen nach außen kommunizieren kann, daß heißt im weltweiten Telekommunikationsnetz voll nutzbar ist.

Die Erfindung wird anhand eines Ausführungsbeispiels, das in der Zeichnung als Blockschaltbild dargestellt ist, näher beschrieben.

In der Zeichnung bedeuten:
- Fig. 1: Eine bekannte Haustelefon-Anlage mit Video-Türeinheit und
- Fig. 2: eine erfindungsgemäße Haustelefon-Anlage mit Video-Türeinheit.

In der Beschreibung, den Patentansprüchen und den Figuren werden folgende Bezugszeichen verwendet:
- 1: Telefon
- 2: Videotelefon
- 3: Telekommunikationsanlage
- 3': Telekommunikationsanlage mit Schnittstelle
- 4: Türsprech-/Videostelle
- 5: externes Telekommunikationsnetz-Netzwerk
- 6: Kamera
- 7: Monitor

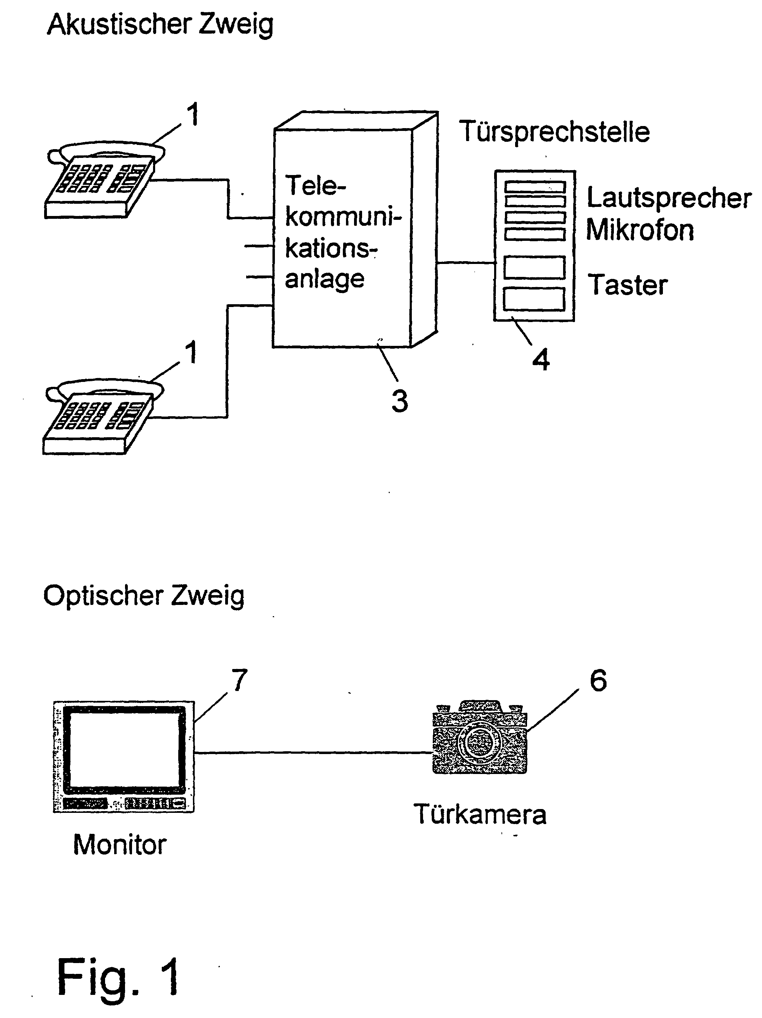

Die Haustelefon-Anlage mit Telefonen 1 und Video-Türeinheit gemäß Fig. 1 besteht aus einem getrennten akustischen Zweig und einem optischen Zweig, die für die Anwendung in Einund Mehrfamilienhäusern oder anderen Gebäuden geeignet ist. Neben den normalen Funktionen einer Telekommunikationsanlage 3 hat die hier gezeigte noch zusätzliche Funktionen einer Türsprechstelle 4 wie zum Beispiel "Freisprechen" mit Personen, die vor der Tür stehen und "Tür öffnen". Als Beispiel für eine derartige bekannte Telekommunikationsanalge ist die Anlage amex 601 oder amex 802 der Deutschen Telekom AG zu nennen. Außerdem ist es bekannt, daß in moderneren Gebäuden und vor allem in zu sichernden Gebäuden getrennt von den Funktionen der Türsprechstelle 4 noch eine Videoanlage im Eingangsbereich angebracht ist, wobei die Türkamera 6 mit einem Monitor 7 im Haus in Verbindung steht.

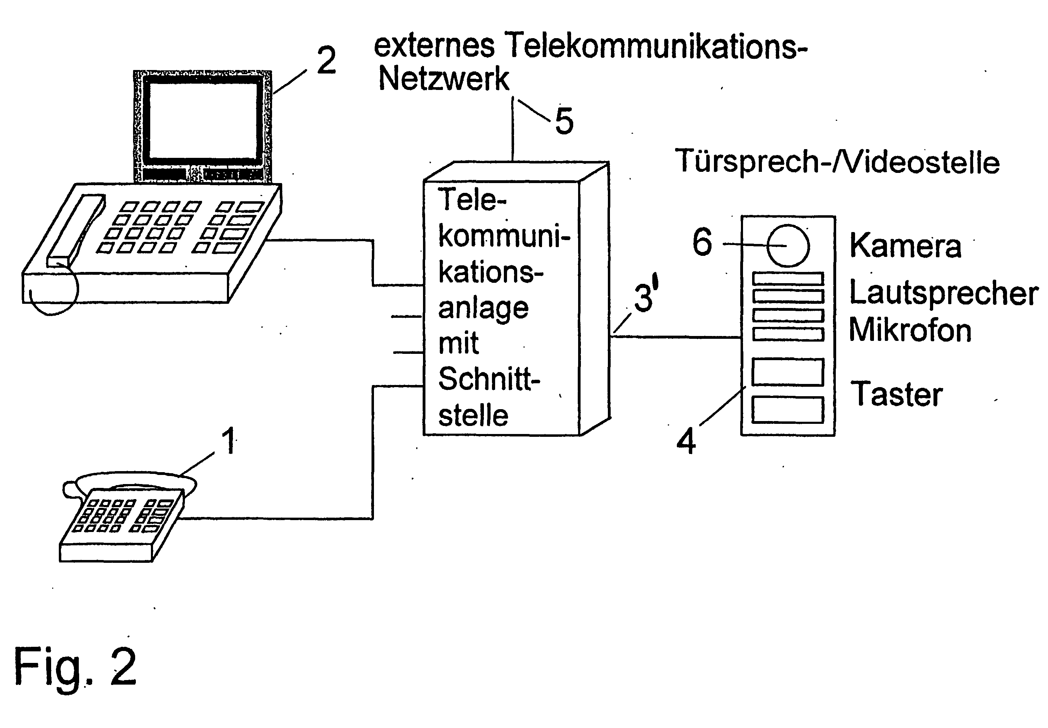

In Fig. 2 ist dagegen eine erfindungsgemäße Haustelekommunikationsanlage mit Schnittstelle 3' dargestellt, die sowohl die Sprech-, als auch die Videofunktion integriert, indem sowohl handelsübliche Telefonapparate 1 als auch Videotelefone 2 auf der einen Seite und Türöffner bzw. -schließer, Videokamera 6, Lautsprecher und Mikrofon sowie Taster einer Türsprech-/Videostelle 4 einer an die andere Seite der gemeinsamen Telekommunikationsanlage 3' angeschlossen sind. Die Telekommunikationsanlage 3' weist eine programmierbare auf analogen Übertragungsverfahren basierende Zwei-Draht-Schnittstelle für eine Türsprechanlage 4 zur Kombination und Anschaltung einer Videobeobachtungseinheit, wie zum Beispiel einer Kamera 6, auf. Die zur Anschaltung einer Türsprechanlage 4 vorgesehene Schnittstelle und die daran anzuschaltende Türstelle ist so ausgebildet, daß sie zur Kommunikation mit einem Videotelefon 2 nach UIT-Empfehlung H.324 und/oder entsprechender Firmenstandards geeignet ist. Die von der Kamera 6 aufgenommenen Bilder werden bei entsprechender Ansteuerung der Torstelle zusammen mit der Toninformation über die Telekommunikationsanlage 3' zu einem handelsüblichen Videotelefon 2 übertragen und dort wiedergegeben. Die programmierbare Schnittstelle dient weiterhin zur Übertragung der erforderlichen Steuerinformationen, wie Klingel ein/aus, Übertragungseinrichtung ein/aus u.s.w.. Das Zusammenfassen der verschiedenen Funktionseinheiten erfolgt derart, daß beim Zusammenwirken der Türstelleneinheit 4 über die Telekommunikationsanlage 3' mit den Endgeräten dieser Telekommunikationsanlage je nach Art des Endgerätes entweder
bei Vorhandensein eines traditionellen Telefons 1 die Schnittstellenbedingungen der Türsprecheinrichtung realisiert werden oder
beim Vorhandensein eines Videotelefons 2 die Schnittstellenbedinungen für diese Einrichtung, ergänzt durch die Steuerinformationen verfügbar sind. Diese Telekommunikationsanlage 3' ist außerdem in der Lage, die Kommunikation mit anderen Videotelefonen im weltweiten Telekommunikationsnetz zu realisieren.

## Patentansprüche

1. Haustelekommunikationsanlage mit einer Schnittstelle (3') zum Anschließen von mehreren Endstellen und einer Türfreisprech-, Klingel-, Türöffner- und Türvideoanlage (4, 6) und zur Verbindung mit einem Telekommunikationsnetz (5), **dadurch gekennzeichnet, dass** die Schnittstelle (3') als programmierbare analoge Zweidraht-Schnittstelle für Sprech- und Videokommunikation und zur Weiterleitung von Steuerinformationen ausgebildet ist und als Telefon (1), Videotelefon (2) oder PC mit Sprech- und Steuerfunktion ausgebildete Endstellen mit der Schnittstelle (3') verbunden sind, um diese programmieren zu können.

2. Haustelekommunikationsanlage nach Anspruch 1,
**dadurch gekennzeichnet, dass**
als Endstellen angeordnete Videotelefone (2) als Video-Türsprechstelle mit Tastern von Klingeln direkt oder indirekt durch von den Klingeln oder für einen Türöffner erzeugte Steuersignale verbunden sind.

3. Haustelekommunikationsanlage nach Anspruch 1,
**dadurch gekennzeichnet, dass**
die programmierbare Zweidraht-Schnittstelle (3') mit als Endstellen angeordneten Telefonen (1) den Schnittstellenbedingungen der Türfreisprechanlage angepasst ist und/oder beim Vorhandensein eines Videotelefons (2) die Schnittstellenbedingungen für diese Endstelle ergänzt durch Steuerinformationen verfügbar sind.

4. Haustelekommunikationsanlage nach einem der vorhergehenden Ansprüche,
**dadurch gekennzeichnet, dass**
die Steuerinformationen Ein-/Ausgangssignale für eine Klingel, einen Türöffner und/oder die jeweilige Übertragungseinrichtung enthalten.

5. Haustelekommunikationsanlage nach einem der vorhergehenden Ansprüche,
**dadurch gekennzeichnet, dass**
Bildsignale zusammen mit Tonsignalen und/oder Steuerinformationen über die programmierbare Zweidraht-Schnittstelle (3') zu an die Haustelekommunikationsanlage angeschlossenen Videotelefonen (2) übertragbar und an die Haustelekommunikationsanlage angeschlossene Telefone (1) oder Videotelefone (2) über die Haustelekommunikationsanlage mit dem Telekommunikationsnetz (5) auf Anforderung oder Ruf verbunden sind.

## Claims

1. House telecommunications system with an interface (3') for the connection of a plurality of terminals and a door-intercom, bell, door-opener and door-video system (4, 6) and for connection to a telecommunications network (5), **characterized in that** the interface (3') is in the form of a programmable analog two-wire interface for voice and video communication and for the forwarding of control information and **in that** terminals in the form of telephone (1), video telephone (2) or PC with voice and control function are connected to the interface (3') in order to be able to program the latter.

2. House telecommunications system according to claim 1, **characterized in that** video telephones (2) arranged as terminals are connected as video door intercom system with switches of bells directly or indirectly by control signals generated by the bells or for a door opener.

3. House telecommunications system according to claim 1, **characterized in that** the programmable two-wire interface (3') with telephones (1) arranged as terminals is adapted to the interface conditions of the door intercom system and/or, if a video telephone (2) is present, the interface conditions for said terminal are available supplemented by control information.

4. House telecommunications system according to any one of the preceding claims, **characterized in that**
the control information contains input/output signals for a bell, a door opener and/or the respective transmission means.

5. House telecommunications system according to any one of the preceding claims, **characterized in that**
image signals together with sound signals and/or control information are transmissible through the programmable two-wire interface (3') to video telephones (2) connected to the house telecommunications system and telephones (1) or video telephones (2) connected to the house telecommunications system are connected on demand or call through the house telecommunications system to the telecommunications network (5).

## Revendications

1. Installation de télécommunications domestique avec une interface (3') pour le raccordement de plusieurs terminaux et d'une installation d'interphone, de sonnette, d'ouverture de porte et de vidéo (4, 6) et pour la connexion à un réseau de télécommunications (5), **caractérisé en ce que** l'interface (3') est conçue comme une interface à deux fils programmable et analogique pour la communication vocale et vidéo et pour la transmission d'informations de commande et que des terminaux comme un téléphone (1), un visiophone (2) ou un PC avec fonction vocale et fonction de commande sont reliés à l'interface (3') pour pouvoir programmer celle-ci.

2. Installation de télécommunications domestique selon la revendication 1, **caractérisée en ce que** des visiophones (2) disposés comme des terminaux sont raccordés directement ou indirectement comme des interphones vidéo avec touche sonnette par des signaux de commande produits par la sonnette ou pour une gâche de porte.

3. Installation de télécommunications domestique selon la revendication 1, **caractérisée en ce que** l'interface à deux fils programmable (3') avec des téléphones (1) disposés comme des terminaux est adaptée aux conditions d'interface de l'installation d'interphone et/ou que les conditions d'interface sont disponibles pour cette interface et complétées par des informations de commande en cas de présence d'un visiophone (2).

4. Installation de télécommunications domestique selon l'une des revendications précédentes, **caractérisée en ce que** les informations de commande contiennent un signal d'entrée/sortie pour une sonnette, une gâche et/ou le dispositif de transmission approprié.

5. Installation de télécommunications domestique selon l'une des revendications précédentes, **caractérisée en ce que** des signaux image sont transmis avec des signaux son et/ou des informations de commande via l'interface à deux fils programmable (3') vers les visiophones (2) raccordés à l'installation de télécommunications domestique et que les téléphones (1) ou visiophones (2) raccordés à l'installation de télécommunications domestique sont connectés via l'installation de télécommunications au réseau de télécommunications (5) raccordés sur demande ou par appel.
